# EUROPÄISCHE PATENTSCHRIFT

(11) **EP 1 403 106 B1**
(45) Veröffentlichungstag und Bekanntmachung des Hinweises auf die Patenterteilung: **29.06.2005**
(21) Anmeldenummer: 03021734.3
(22) Anmeldetag: 25.09.2003
(51) Int. Cl.: B60H 1/22

(54) **Heizsystem für ein Fahrzeug**
Heating system for a motor vehicle
Système de chauffage pour véhicule

(30) Priorität: 26.09.2002 DE 10244883
(43) Veröffentlichungstag der Anmeldung: 31.03.2004
(73) Patentinhaber: J. Eberspächer GmbH & Co. KG, 73730 Esslingen (DE)
(72) Erfinder: Kaupert, Andreas, 89073 Ulm (DE); Eberspach, Günter, 72649 Wolfschlugen (DE)
(74) Vertreter: Ruttensperger, Bernhard, Dipl.-Phys.

(56) Entgegenhaltungen:
- EP-A- 1 179 709
- EP-A- 1 234 697
- WO-A-02/40396
- US-A1- 2001 031 387

## Beschreibung

Die vorliegende Erfindung betrifft ein Heizsystem für Fahrzeuge.

Bei modernen Kraftfahrzeugen besteht zum einen auf Grund verschiedener technischer Anforderungen und zum anderen auf Grund des geforderten erhöhten Komforts zunehmend das Erfordernis des Bereitstellens eines Standheizsystems, welches im Wesentlichen unabhängig vom Betrieb eines Antriebsaggregats, also beispielsweise einer Brennkraftmaschine, durch Verbrennung eines Brennstoff/Luft-Gemisches zur Wärmeerzeugung in der Lage ist. Gleichwohl besteht jedoch auch aus Kostengründen die Anforderung, Fahrzeuge und verschiedene darin vorgesehene Systeme möglichst so auszugestalten, dass durch Funktionen- und Komponentenverschmelzung ein günstigeres und insbesondere auch hinsichtlich des beanspruchten Bauraums verbessertes System erhalten wird.

Die EP 1 234 697 A1 offenbart ein Fahrzeugheizsystem mit einer Brennstoffzelle. Diese nimmt Wasserstoff von einem Reformer auf. Ein zur Wärmeerzeugung vorgesehener Brenner wird mit flüssigem Brennstoff gespeist.

Die EP 1 179 709 A2 offenbart einen mit Wasserstoff und Luft versorgten Brenner zur Wärmeerzeugung. Der Wasserstoff wird von einem Wasserstoffreservoir zugeführt.

Es ist die Aufgabe der vorliegenden Erfindung, ein Heizsystem für ein Fahrzeug bereitzustellen, das eine effiziente Erwärmung verschiedener Systembereiche eines Fahrzeugs in baulich vereinfachter Art und Weise realisiert.

Gemäß der vorliegenden Erfindung wird diese Aufgabe gelöst durch ein Heizsystem für ein Fahrzeug mit einem Brennstoff-Reformersystem , das Brennstoff-Reformersystem umfassend eine Reformeranordnung zur Erzeugung von Wasserstoff aus einem Kohlenwasserstoff/Mischmaterial-Gemisch, eine Brenneranordnung zur Aufnahme von in der Reformeranordnung erzeugtem Wasserstoff und Verbrennung desselben, eine Wärmetauscheranordnung zur Übertragung von in der Brenneranordnung entstehender Verbrennungswärme auf ein Heizmedium.

Wesentlich ist bei der vorliegenden Erfindung, dass ein Systembereich eines Fahrzeugs, nämlich eine Reformeranordnung, in welcher beispielsweise für den Betrieb einer Brennstoffzelle Wasserstoff bereitgestellt wird, auch einen Bestandteil eines Heizsystems bildet, nämlich dadurch, dass der von der Reformeranordnung bereitgestellte Wasserstoff verbrannt wird und die dadurch entstehende Verbrennungswärme zur Erwärmung verschiedener Fahrzeugsystembereiche genutzt werden kann. Insofern kann also die Standheizungs- oder Zuheizerfunktion in ein Reformersystem integriert werden, und es ist nicht erforderlich, ein separates Standheizgerät bereitzustellen.

Da bei der erfindungsgemäßen Ausgestaltung eines Heizsystems in der Brenneranordnung eine Verbrennung des aus der Reformeranordnung bereitgestellten Wasserstoffs stattfindet, ist es vorteilhaft, wenn zwischen der Reformeranordnung und einer Brennkammer der Brenneranordnung eine Flammsperre angeordnet ist. Es wird somit eine Fremd- oder Rückzündung in die Reformeranordnung bei in der Brenneranordnung ablaufender Verbrennung auch dann effektiv unterbunden, wenn diese beiden Systembereiche vergleichsweise nahe beieinander liegen.

Gemäß einem weiteren vorteilhaften Aspekt können Zuführmittel vorgesehen sein zum Zuführen von in der Reformeranordnung erzeugtem Wasserstoff zu wenigstens einem weiteren Wasserstoff verbrauchenden System. Dabei kann beispielsweise das wenigstens eine weitere Wasserstoff verbrauchende System ein Abgasnachbehandlungssystem für eine Brennkraftmaschine oder/und eine Brennstoffzelle umfassen.

Um insbesondere dann, wenn in einem Fahrzeug zusätzliche Wasserstoffverbraucher vorgesehen sind, die Reformeranordnung sehr effizient nutzen zu können, wird vorgeschlagen, dass die Zuführmittel Aufteilungsmittel umfassen zum Aufteilen von in der Reformeranordnung erzeugtem Wasserstoff auf die Brenneranordnung und das wenigstens eine weitere Wasserstoff verbrauchende System.

Da bei einer derartigen Anordnung in verschiedenen Betriebsphasen verschiedene der Wasserstoff verbrauchenden Systembereiche zu aktivieren sind, während andere Systembereiche nicht mit Wasserstoff versorgt werden sollen, kann weiter vorgesehen sein, dass das Aufteilungsverhältnis der Aufteilungsmittel veränderbar ist.

Bei einer alternativen, baulich sehr einfach zu realsierenden und auch einfach zu betreibenden Ausgestaltungsform kann vorgesehen sein, dass durch die Zuführmittel ein Auslassbereich der Brenneranordnung mit dem wenigstens einen weiteren Wasserstoff verbrauchenden System verbunden ist.

Die vorliegende Erfindung wird nachfolgend mit Bezug auf die beiliegenden Zeichnungen anhand bevorzugter Ausgestaltungsformen detailliert beschrieben. Es zeigt:
- Fig. 1: eine schematische Längsschnittansicht eines erfindungsgemäßen Heizsystems;
- Fig. 2: eine Querschnittansicht des in Fig. 1 dargestellten Heizsystems im Bereich der Brenneranordnung;
- Fig. 3: eine blockbildartige Darstellung einer Ausgestaltungsart eines erfindungsgemäßen Heizsystems bzw. der Integration desselben in ein Fahrzeug;
- Fig. 4: eine der Fig. 3 entsprechende Ansicht einer alternativen Ausgestaltungsart.

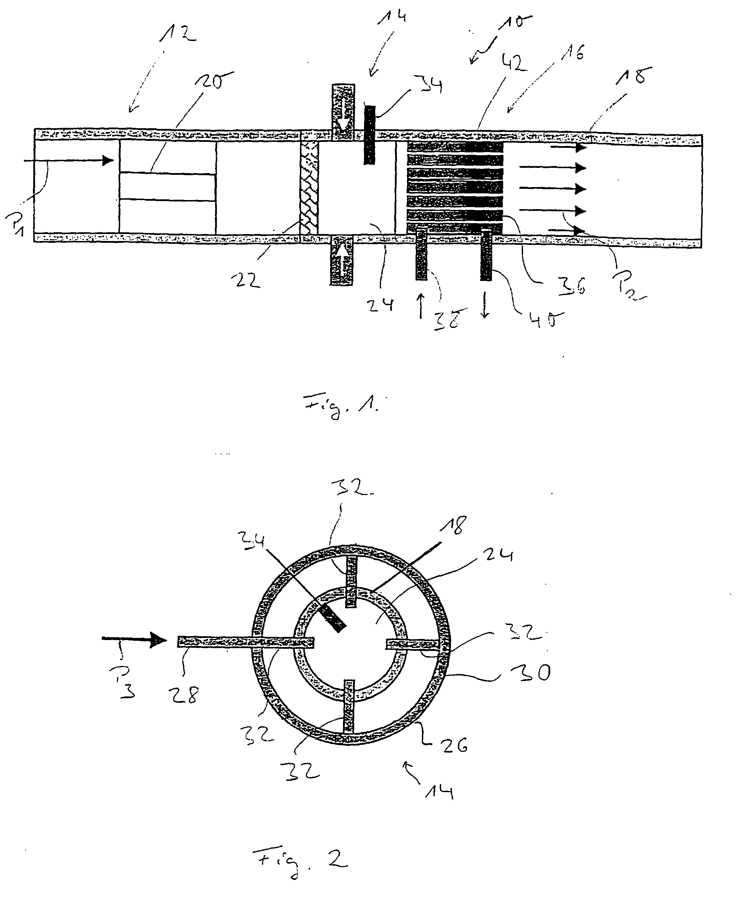

In Fig. 1 ist ein erfindungsgemäßes System allgemein mit 10 bezeichnet. Dieses System kann im Wesentlichen in drei Bereiche gegliedert werden, nämlich eine im stromaufwärtigen Bereich liegende Reformeranordnung 12, eine stromabwärts darauf folgende Brenneranordnung 14 sowie eine auf die Brenneranordnung 14 folgend angeordnete Wärmetauscheranordnung 16. Bei einer auf Grund des einfachen Aufbaus bevorzugten Ausgestaltungsform können all diese Systembereiche 12, 14, 16 in einem einzigen rohrartigen Gehäusebereich 18 aufgenommen sein.

Die Reformeranordnung 12 umfasst einen symbolisch dargestellten Katalysator 20, in welchem ein durch den Pfeil P₁ symbolisiertes Gemisch aus Luft und Kohlenwasserstoff, beispielsweise Dieselkraftstoff, ggf. unter der Beimengung von Wasser oder ein reines Wasser/Kohlenwasserstoff-Gemisch zersetzt wird, so dass die Reformeranordnung 12 ein gasartiges Gemisch verlässt, in welchem ein vergleichsweise hoher Anteil an Wasserstoff enthalten ist. Die Reformeranordnung 12 kann zur Erzeugung des zu zersetzenden Gemisches eine Verdampferanordnung aufweisen, welche vorerwärmt werden kann bzw. welcher auch bereits vorerwärmtes Ausgangsmaterial zur Erzeugung des Gemisches zugeführt werden kann. Auch dem Katalysator 20 kann eine Heizeinrichtung zugeordnet sein, um diesen auf die zur Katalyse erforderliche Temperatur zu bringen, welche bei Einsatz von Dieselkraftstoff als Kohlenwasserstoff im Bereich von 320°C liegt.

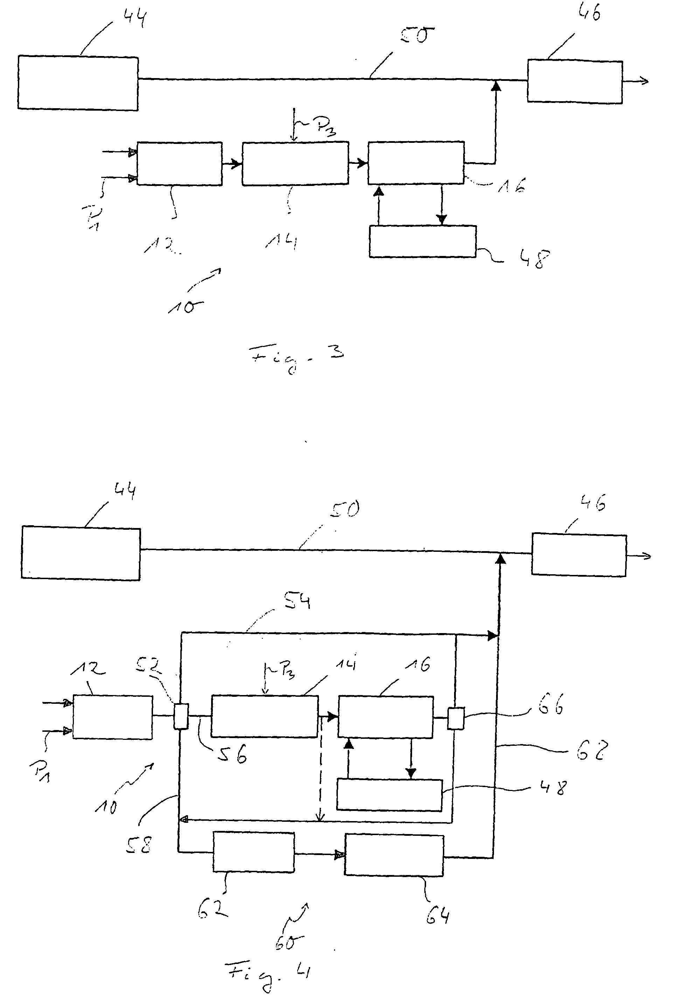

Das die Reformeranordnung 12 verlassende Gas tritt über eine Flammsperre 22 in die Brenneranordnung 14 bzw. eine Brennkammer 24 derselben ein. In diese Brennkammer 24 wird über ein in Fig. 2 dargestelltes Luftzuführleitungssystem 26 ferner Verbrennungsluft eingespeist. Dieses Luftzuführleitungssystem 26 umfasst einen Luft, symbolisiert durch den Pfeil P₃, von außen zuführenden Leitungsbereich 28, einen ringartigen Verteilungsleitungsbereich 30 sowie eine Mehrzahl von in die Brennkammer 24 führenden Lufteinspeisungsabschnitten 32. Es wird auf diese Art und Weise eine möglichst gleichmäßige Einspeisung der zusammen mit dem in die Brennkammer 24 geleiteten Wasserstoff zu verbrennenden Luft erlangt. Um das Gemisch aus Luft und Wasserstoff zu zünden und somit die Verbrennung auszulösen, kann ein Zündorgan 34 vorgesehen sein, welches eine Glühwendel oder dergleichen aufweisen kann.

Die bei der Verbrennung in der Brenneranordnung 14 entstehenden Verbrennungsprodukte, welche allgemein in gasförmiger Art vorliegen, transportieren die bei der Verbrennung ebenfalls entstehende Wärme in Richtung zur Wärmetauscheranordnung 16. Diese umfasst einen nur prinzipiell dargestellten Wärmetauscherkörper 36, in welchen über einen Einlassbereich 38 zu erwärmendes Medium, beispielsweise Luft oder ggf. auch Flüssigkeit, eingespeist wird und aus welchem über einen Auslassbereich 40 dieses Medium wieder abgezogen wird. Eine Mehrzahl von durch den Wärmetauscherkörper 36 hindurchführenden Strömungskanälen 42 wird von den Verbrennungsprodukten, welche die Brenneranordnung 14 verlassen, durchströmt, so dass ein Wärmeübertrag auf das den Wärmetauscherkörper 36 durchströmende zu erwärmende Medium stattfinden kann. Wie durch die Pfeile P₂ angedeutet, verlassen dann die Verbrennungsprodukte bzw. Verbrennungsabgase die Wärmetauscheranordnung 16 und können beispielsweise in ein im Fahrzeug vorgesehenes Abgassystem eingespeist werden oder in einer Art und Weise weiter genutzt werden, wie nachfolgend noch beschrieben.

Durch das in den Figuren 1 und 2 dargestellte System wird es also möglich, das in einer Reformeranordnung 12 erzeugte Wasserstoffgas durch Verbrennung als Brennstoff zu nutzen, beispielsweise um in einem Standheizmodus Luft zu erwärmen, die in einen Fahrzeuginnenraum eingespeist werden soll, oder um in einem Vorheizmodus zum Vorerwärmen eines Antriebsaggregats dessen Kühlmedium zu erwärmen und somit das Antriebsaggregat auf eine für den nachfolgenden Betrieb geeignete Temperatur zu bringen.

Die Integration eines derartigen Systems 10, wie es in den Figuren 1 und 2 gezeigt ist, in ein Fahrzeugsystem wird nachfolgend mit Bezug auf die Fig. 3 beschrieben. Dort ist mit dem Bezugszeichen 44 eine als Antriebsaggregat eingesetzte Brennkraftmaschine bezeichnet. Die Verbrennungsabgase desselben werden zur Verminderung des Schadstoffausstoßes in einem Abgasnachbehandlungssystem 46 nachbehandelt. Dieses umfasst im Allgemeinen einen nicht dargestellten Katalysator.

Man erkennt in der Fig. 3 weiter das erfindungsgemäße Heizsystem 10, welches in Strömungsrichtung aufeinander folgend die Reformeranordnung 12, die Brenneranordnung 14 und die Wärmetauscheranordnung 16 aufweist. Die Reformeranordnung 12 empfängt, wie durch die Pfeile P₁ wieder symbolisiert, das zu zersetzende Gemisch aus Kohlenwasserstoff und weiterem Mischmaterial, beispielsweise Luft oder/und Wasser. Dieses Gemisch wird, wie vorangehend beschrieben, zersetzt und der dabei entstehende Wasserstoff kann unter Beimengung von Luft, symbolisiert durch den Pfeil P₃, verbrannt werden. Die dabei entstehende Wärme wird in der Wärmetauscheranordnung 16 auf ein Medium übertragen, das einen zu erwärmenden Systembereich 48, also beispielsweise einen Fahrzeuginnenraum, dann erwärmt. Im Verbrennungsbetrieb der Brenneranordnung 14 treten dann die die Wärmetauscheranordnung 16 verlassenden Verbrennungsabgase, die insbesondere dann, wenn eine Zirkulation des zu erwärmenden Mediums nur in begrenztem Ausmaß vorliegt oder überhaupt nicht vorliegt, noch eine vergleichsweise hohe Temperatur aufweisen werden, mit dieser hohen Temperatur in das Abgasführungssystem 50 des Fahrzeugs ein. Diese Verbrennungabgase treten weiter dann in das Abgasnachbehandlungssystem 46 ein und umströmen dort den zur Abgasnachbehandlung wirksamen Katalysator. Es kann somit in einer Phase, in welcher die Brennkraftmaschine 44 noch nicht in Betrieb gesetzt ist und somit das gesamte Abgasführungssystem 50 eine vergleichsweise niedrige Temperatur aufweist, durch Vorheizen des Abgasnachbehandlungssystems 46, insbesondere des Katalysators desselben, dafür gesorgt werden, dass von Beginn des Betriebs des Brennkraftmaschine 44 an dieses Abgasnachbehandlungssystem 46 in der Lage ist, die von der Brennkraftmaschine 44 ausgestoßenen Abgase in der erforderlichen Art und Weise umzusetzen und insbesondere den Anteil an Stickoxiden zu reduzieren.

Um in einer Betriebsphase, in welcher die Brennkraftmaschine 44 bereits in Betrieb gesetzt ist und insofern einerseits als Wärmequelle zur Erwärmung von in den Fahrzeuginnenraum einzuspeisender Luft wirksam ist, andererseits jedoch auch das Abgasführungssystem 50 und somit auch das Abgasnachbehandlungssystem 46 durch die einen erheblichen Anteil an Wärmeenergie transportierenden Verbrennungsabgase der Brennkraftmaschine 44 auf der erforderlichen Betriebstemperatur gehalten werden, für eine weiter verbesserte Abgasreinigung sorgen zu können, ist es möglich, das erfindungsgemäße Heizsystem 10 so zu betreiben, dass zwar die Reformeranordnung 12 Wasserstoff produziert, dass jedoch die Brenneranordnung 14 deaktiviert ist, d.h. der in diese eingespeiste Wasserstoff dort nicht verbrannt wird und ggf. auch nicht mit zusätzlicher Luft vermischt wird. Die die Reformeranordnung 12 verlassenden und eine größere Menge Wasserstoff enthaltenden Gase durchströmen dann ohne weitere Wirkung die Wärmetauscheranordnung 16 und gelangen in das Abgasführungssystem 50 und somit auch das Abgasnachbehandlungssystem 46. Somit wird in die Abgase der Brennkraftmaschine 44 eine erhebliche Menge an Wasserstoff eingespeist, welcher zur Verminderung des Stickoxidanteils sowohl mit NO₂ als auch mit NO zur Erzeugung von N₂ und H₂O umgesetzt werden kann.

Man erkennt aus der vorangehenden Beschreibung, dass durch die Eingliederung in das Gesamtsystem Fahrzeug das erfindungsgemäße Heizsystem 10 in vielfältiger Art und Weise betrieben werden kann und so in verschiedenen Betriebspahsen, in welchen auch verschiedene Anforderungen bestehen, also die Anforderung nach Vorerwärmung verschiedener Systembereiche einerseits und ggf. die Bereitstellung von Wasserstoff zur weiteren Verarbeitung andererseits, wirksam sein kann.

Ein weiteres Gesamtsystem, in welches das erfindungsgemäße Heizsystem zur Erhöhung der Gesamtfunktionalität eingegliedert werden kann, ist in Fig. 4 gezeigt. Man erkennt auch hier wieder das Antriebsaggregat 44, das Abgasführungssystem 50 desselben so wie das Abgasnachbehandlungssystem 46. Bei dem Heizsystem 10 ist nunmehr zwischen der Reformeranordnung 12 und der Brenneranordnung 14 eine Ventilanordnung 52 vorgesehen. Duch diese Ventilanordnung 52 kann das die Reformeranordnung 12 verlassende Gasgemisch über einen Leitungszweig 54 direkt in das Abgasführungssystem 50 der Brennkraftmaschine 44 eingespeist werden, kann über einen Leitungsbereich 56 zur Brenneranordnung 14 geleitet werden oder kann über einen Leitungsbereich 58 zu einem allgemein mit 60 bezeichneten Brennstoffzellensystem geleitet werden. Dieses Brennstoffzellensystem 60 kann ein Gasreinigungssystem 62 in Vorschaltung zu der eigentlichen Brennstoffzelle 64 umfassen. Insbesondere bei Einsatz sogenannter Niedertemperaturbrennstoffzellen, welche in einem Temperaturbereich von etwa 80°C arbeiten, ist es erforderlich, das die Reformeranordnung 12 verlassende Gasgemisch mit Wasserstoff anzureichern und den Kohlenmonoxidgehalt so weit als möglich zu verringern. Hierzu weisen derartige Gasreinigungssysteme 62 im Allgemein ebenfalls Katalysatoren auf, die in einem Temperaturbereich von 200°C bis 500°C arbeiten. Dies bedeutet, dass vor der Inbetriebnahme der Brennstoffzelle 64 zumindest das Gasreinigungssystem 62 entsprechend vorerwärmt werden muss, vorzugsweise auch die Brennstoffzelle 64 selbst auf eine geeignete Betriebstemperatur gebracht werden muss. Dies kann bei dem in der Fig. 4 dargestellten erfindungsgemäßen System wie folgt realisiert werden:

In einer Phase vor der Inbetriebnahme der Brennstoffzelle 64 wird zunächst bei beispielsweise nicht aktivierter Brennkraftmaschine 64 durch die Ventilanordnung 52 das die Reformeranordnung 12 verlassende Gasgemisch in die Brenneranordnung 14 geleitet und dort verbrannt. Diese Verbrennungsabgase verlassen dann die Brenneranordnung 14 und gelangen nach dem Durchströmen der Wärmetauscheranordnung 16 zu einer weiteren Ventilanordnung 66, die in dieser Phase so geschaltet ist, dass die Verbrennungsabgase der Brennernaordnung 14 in den Leitungsbereich 58 stromaufwärts des Gasreinigungssystems 62 eingespeist werden. Selbstverständlich kann in dieser Betriebsphase die Wärmetauscheranordnung 16 auch aktiv sein, um durch Erwärmung eines Heizmediums, beispielsweise von in einen Fahrzeuginnenraum einzuspeisender Luft, in einem Standheizmodus wirksam zu sein. Die in den Leitungsbereich 58 einströmenden erwärmten Verbrennungsabgase durchströmen auch das Gasreinigungssystem 62 und ggf. auch die Brennstoffzelle 64, um auch diese zu erwärmen, und gelangen dann über einen Leitungsbereich 68 beispielsweise in das Abgasführungssystem 50 der Brennkraftmaschine 44, um weiterhin auch noch den Katalysator des Abgasnachbehandlungssystems 46 zumindest mit der verbliebenen Restwärme noch vorzuwärmen.

Ist das Gasreinigungssystem 62 auf geeigneter Betriebstemperatur, kann durch Umschalten der Ventilanordnung 52 dafür gesorgt werden, dass zumindest ein Teil des die Reformeranordnung 12 verlassenden Gasgemisches nunmehr in den Leitungsbereich 58 einströmt, um somit für die Brennstoffzelle 64 unter Einsatz des Gasreinigungssystems 62 ein in geeigneter Weise mit Wasserstoff angereichertes und von sonstigen Verunreinigungen befreites Gas bzw. Gasgemisch bereitzustellen und die Brennstoffzelle 64 in Betrieb setzen zu können. In dieser Betriebsphase kann weiterhin die Ventilanordnung 66 so geschaltet werden, dass die die Brenneranordnung 14 bzw. die Wärmetauscheranordnung 16 verlassenden Verbrennungsabgase in den zum Abgasführungssystem 50 der Brennkraftmaschine 44 führenden Leitungsbereich 54 und nicht mehr in den zum Brennstoffzellensystem 60 führenden Leitungsbereich 58 strömen. Es kann dann die Brennstoffzelle 64 zur Erzeugung elektrischer Energie betrieben werden, beispielsweise um ein Antriebsaggregat oder ein Hilfsantriebsaggregat betreiben zu können oder elektrische Energie für das Bordnetz bereitstellen zu können. In dieser Betriebsphase kann gleichzeitig auch die Brennkraftmaschine 44 betrieben werden, wobei dann die Ventilanordnung 52 so geschaltet sein kann, dass das die Reformeranordnung 12 verlassende Gasgemisch auf die beiden Leitungsbereiche 54 und 58 aufgeteilt wird und kein Gasgemisch mehr in den Leitungsbereich 56 einströmt. Dies hat zur Folge, dass einerseits Wasserstoff zum Betrieb der Brennstoffzelle 64 bereitgestellt wird, und andererseits Wasserstoff zur Einspeisung in die Verbrennungsabgase der Brennkraftmaschine 44 und somit verbesserten Nachbehandlung derselben im Abgasnachbehandlungssystem 46 zur Verfügung steht. Soll in dieser Betriebsphase auch durch die Brenneranordnung 14 noch zusätzlich Wärme bereitgestellt werden, beispielsweise zum Erfüllen einer sogenannten Zuheizerfunktion, so kann die Ventilanordnung 52 so geschaltet werden, dass mit dem gewünschten Aufteilungsverhältnis in alle drei Leitungsbereiche 54, 56, 58 Wasserstoff enthaltendes Gasgemisch eingeleitet wird.

Es ist selbstverständlich, dass an dem in Fig. 4 gezeigten System verschiedene Änderungen vorgenommen werden können. So könnte, wie durch einen strichlierten Pfeil angedeutet, das die Brenneranordnung 14 verlassende Verbrennungsabgas durch Bereitstellung entsprechender Umschaltmittel direkt in den Leitungsbereich 58 eingespeist werden, um in der Wärmetauscheranordnung 16 möglicherweise auftretende Wärmeverluste vermeiden zu können. Auch könnte der Leitungsbereich 54 weggelassen werden, so dass dann, wenn zur verbesserten Abgasreinigung im Abgasnachbehandlungssystem 46 Wasserstoff in das Abgasführungssystem 50 der Brennkraftmaschine 44 eingespeist werden soll, die Ventilanordnung 52 so geschaltet wird, dass zumindest ein Teil des Wasserstoff enthaltenden Gasgemisches aus der Reformeranordnung 12 in den Leitungsbereich 56 strömt, wobei gleichzeitig jedoch die Brennanordnung 14 deaktiviert ist und somit dieses Gasgemisch durch entsprechende Schaltung der Ventilanordnung 66 in das Abgasführungssystem 50 gelangen kann. Weiterhin ist es möglich, das Gasreinigungssystem 62 oder/und die Brennstoffzelle 64 oder/und den Katalysator 20 der Reformeranordnung 12 unter Einsatz der Wärmetauscheranordnung 16 zu erwärmen, also beispielsweise im Falle des Gasreinigungssystems 62 dieses nicht direkt mit den Verbrennungsabgasen der Brennanordnung 14 zu durchströmen, sondern durch ein zwischen der Wärmetauscheranordnung 16 und dem Gasreinigungssystem 62 zirkulierendes Heizmedium Wärme auf dieses Gasreinigungssystem 62 zu übertragen. Entsprechendes gilt selbstverständlich auch für die anderen angesprochenen Systembereiche, wie z.B. die Brennstoffzelle 64.

An Stelle der in der Fig. 4 erkennbaren Ventilanordnung 52, welche dafür sorgt, dass in bestimmten Betriebsphasen in für diese Betriebsphasen jeweils optimaler Art und Weise eine Aufteilung des die Reformeranordnung 12 verlassenden Gasgemisches stattfinden kann und somit bestimmte Leitungsbereiche vollständig abgeschlossen werden können, ist es grundsätzlich auch möglich, eine Anordnung vorzusehen, durch welche ein festes Aufteilungsverhältnis vorgegeben ist, beispielsweise dann, wenn die in den Leitungsbereich 54 und die in den Leitungsbereich 58 einzuspeisenden Gasmengen bei einem bestimmten vorgegebenen System immer in einem bestimmten Mengenverhältnis zueinander stehen sollen. Hier kann beispielsweise ein Rohr mit geteiltem Querschnitt für ein entsprechendes Aufteilungsverhältnis sorgen.

Gemäß einem weiteren bzw. zusätzlichen Aspekt ist es möglich, bei den vorangehend dargestellten erfindungsgemäßen Systemen 10 das die Reformeranordnung 12 verlassende wasserstoffhaltige Gasgemisch zum Teil oder vollständig nicht direkt zu einem Wasserstoff verbrauchenden System zu leiten, sondern in einen Zwischenspeicher zu leiten, wo es unter Druck aufgenommen werden kann. So könnte beispielsweise bei dem in Fig. 3 dargestellten System zwischen der Reformeranordnung 12 und der Brenneranordnung 14 ein derartiger Speicher positioniert sein, welcher zur Reformeranordnung 12 oder/und zur Brenneranordnung 14 hin dann durch jeweilige Ventilanordnungen oder dergleichen absperrbar sein kann. In dem System der Fig. 4 könnte ein derartiger Speicher zwischen der Reformeranordnung 12 und der Ventilanordnung 52 positioniert sein. Es wird bei einer derartigen Anordnung dann möglich, die Reformeranordnung 12 unabhängig vom tatsächlichen Wasserstoffbedarf zu betreiben, so dass in Phasen, in welchen kein oder nur ein geringer Bedarf an Wasserstoff vorhanden ist, der Speicher geladen wird, und in Phasen, in welchen ein höherer Bedarf an Wasserstoff vorhanden ist, der Speicher entladen wird. Beispielsweise kann in einer Phase sehr hohen Wasserstoffbedarfs ein Wasserstoff verbrauchendes System sowohl aus dem Speicher als auch direkt aus der Reformeranordnung 12 gespeist werden. Auf diese Art und Weise wird es möglich, Wasserstoff verbrauchende Systeme auch in einer Betriebsphase zu speisen, in welcher in der Reformeranordnung 12 beispielsweise die zur Durchführung der katalytischen Reaktion erforderlichen Temperaturen noch nicht vorhanden sind. Ferner wird es möglich, die Reformeranordnung 12 bei von der tatsächlichen Wasserstoffanordnung unabhängigen optimalen Betriebsparametern zu betreiben, um deren Effizienz zu erhöhen.

## Patentansprüche

1. Heizsystem für ein Fahrzeug (12) mit einem Brennstoff-Reformersystem, das Brennstoff-Reformersystem, umfassend:
- eine Reformeranordnung zur Erzeugung von Wasserstoff aus einem Kohlenwasserstoff/Mischmaterial-Gemisch,
- eine Brenneranordnung (14) zur Aufnahme von in der Reformeranordnung (12) erzeugtem Wasserstoff und Verbrennung desselben,
- eine Wärmetauscheranordnung (16) zur Übertragung von in der Brenneranordnung (14) entstehender Verbrennungswärme auf ein Heizmedium.

2. Heizsystem nach Anspruch 1,
**dadurch gekennzeichnet, dass** zwischen der Reformeranordnung (12) und einer Brennkammer (24) der Brenneranordnung (14) eine Flammsperre (22) angeordnet ist.

3. Heizsystem nach Anpruch 1 oder 2,
**dadurch gekennzeichnet, dass** Zuführmittel (14, 16; 52, 54, 58) vorgesehen sind zum Zuführen von in der Reformeranordnung (12) erzeugtem Wasserstoff zu wenigstens einem weiteren Wasserstoff verbrauchenden System (46, 60).

4. Heizsystem nach Anspruch 3,
**dadurch gekennzeichnet, dass** das wenigstens eine weitere Wasserstoff verbrauchende System (46, 60) ein Abgasnachbehandlungssystem (46) für eine Brennkraftmaschine (44) oder/und eine Brennstoffzelle (60) umfasst.

5. Heizsystem nach Anspruch 3 oder 4,
**dadurch gekennzeichnet, dass** die Zuführmittel (52, 54, 58) Aufteilungsmittel (52) umfassen zum Aufteilen von in der Reformeranordnung (12) erzeugtem Wasserstoff auf die Brenneranordnung (14) und das wenigstens eine weitere Wasserstoff verbrauchende System (46, 60).

6. Heizsystem nach Anspruch 5,
**dadurch gekennzeichnet, dass** das Aufteilungsverhältnis der Aufteilungsmittel (52) veränderbar ist.

7. Heizystem nach Anspruch 3 oder 4,
**dadurch gekennzeichnet, dass** durch die Zuführmittel (14, 16) ein Auslassbereich der Brenneranordnung (14) mit dem wenigstens einen weiteren Wasserstoff verbrauchenden System (46) verbunden ist.

## Claims

1. A heating system for a vehicle (12) having a fuel reformer system, said fuel reformer system comprising:
- a reformer arrangement for producing hydrogen from a hydrocarbon/mixed material mixture,
- a burner arrangement (14) for reception of hydrogen produced in the reformer arrangement (12) and combustion thereof, and
- a heat exchanger arrangement (16) for transferring combustion heat produced in the burner arrangement (14) to a heating medium.

2. The heating system as claimed in claim 1, wherein a flame trap (22) is arranged between the reformer arrangement (12) and a combustion chamber (24) of the burner arrangement (14).

3. The heating system as claimed in claim 1 or 2, wherein feeding means (14, 16; 52, 54, 58) are provided for feeding hydrogen produced in the reformer arrangement (12) to at least one further hydrogen-consuming system (46, 60).

4. The heating system as claimed in claim 3, wherein the at least one further hydrogen-consuming system (46, 60) comprises an exhaust-gas aftertreatment system (46) for an internal combustion engine (44) and/or a fuel cell (60).

5. The heating system as claimed in claim 3 or 4, wherein the feeding means (52, 54, 58) comprise distributing means (52) for distributing hydrogen produced in the reformer arrangement (12) to the burner arrangement (14) and the at least one further hydrogen-consuming system (46, 60).

6. The heating system as claimed in claim 5, wherein the ratio of distribution of the distributing means (52) can be changed.

7. The heating system as claimed in claim 3 or 4, wherein the feeding means (14, 16) connect an outlet region of the burner arrangement (14) to the at least one further hydrogen-consuming system (46).

## Revendications

1. Système de chauffage pour véhicules (12), comportant un système de reformage de combustible, le système de reformage de combustible comprenant :
- une disposition de reformeurs permettant de générer de l'hydrogène à partir d'un mélange d'hydrocarbure et de matériel mixte,
- une disposition de brûleurs (14) permettant d'absorber l'hydrogène produit dans la disposition de reformeurs (12) et de le brûler,
- un dispositif d'échangeurs de chaleur (16) permettant la transmission de la chaleur de combustion, dégagée dans le dispositif de brûleur (14) à un fluide de chauffage.

2. Système de chauffage selon la revendication 1,
**caractérisé en ce qu'**un dispositif anti-retour de flamme (22) est disposé entre la disposition de reformeurs (12) et une chambre de combustion (24) du dispositif de brûleurs (14).

3. Système de chauffage selon la revendication 1 ou 2,
**caractérisé en ce que** des moyens d'admission (14, 16 ; 52, 54, 58) sont prévus qui permettent l'acheminement de l'hydrogène produit dans la disposition de reformeurs (12) vers au moins un autre système consommant de l'hydrogène (46, 60).

4. Système de chauffage selon la revendication 3,
**caractérisé en ce qu'**au moins un autre système consommant de l'hydrogène (46, 60) comporte un système de retraitement des gaz d'échappement (46) pour un moteur à combustion (44) et/ou une pile à combustible (60).

5. Système de chauffage selon la revendication 3 ou 4,
**caractérisé en ce que** les moyens d'admission (52, 54, 58) comportent des moyens de répartition (52) permettant la répartition de l'hydrogène produit dans la disposition de reformeurs (12) sur la disposition de brûleurs (14) et au moins un autre système consommant de l'hydrogène (46, 60).

6. Système de chauffage selon la revendication 5,
**caractérisé en ce que** le rapport de répartition des moyens de répartition (52) peut être modifié.

7. Système de chauffage selon la revendication 3 ou 4,
**caractérisé en ce qu'**une zone d'évacuation de la disposition de brûleurs (14) est reliée à au moins un autre système (46) consommant de l'hydrogène par l'intermédiaire des moyens d'admission (14, 16).
